Europäisches Patentamt

European Patent Office

Office européen des brevets

(11) Publication number: **0 341 680**
A1

# (12) EUROPEAN PATENT APPLICATION

(21) Application number: **89108366.9**

(22) Date of filing: **10.05.89**

(51) Int. Cl.4: **C22C 38/12** , **C22C 38/16** , **B60C 9/00**

(30) Priority: **12.05.88 JP 116566/88**

(43) Date of publication of application:
**15.11.89 Bulletin 89/46**

(84) Designated Contracting States:
**DE FR GB IT**

(71) Applicant: **TOKUSEN KOGYO COMPANY LIMITED**
**1081-banchi Minamiyama**
**Sumiyoshi-cho Ono Hyogo(JP)**

(72) Inventor: **Kuromizu, Fumio**
**1081, Sumiyoshi-cho**
**Ono Hyogo(JP)**
Inventor: **Shimizu, Toshiaki**
**1081, Sumiyoshi-cho**
**Ono Hyogo(JP)**
Inventor: **Kushibe, Haruo**
**1081, Sumiyoshi-cho**
**Ono Hyogo(JP)**

(74) Representative: **Lange, Gerd, Dipl.-Ing.**
**Nachtigallenweg 8 Postfach 2425**
**D-4950 Minden(DE)**

(54) Steel cord and radial tires reinforced with steel cord.

(57) A steel cord consisting of very fine steel wires twisted together and used as a reinforcing material in rubber products, especially vehicle tyres. The steel contains, in weight percentages:

C : 0.60 - 0.90
Si : 0.15 - 0.35
Mn : 0.30 - 0.90
Cu : 0.10 - 0.50 and/or V : 0.05 - 1.00
remainder Fe.

EP 0 341 680 A1

## Steel cord and radial tires reinforced with steel cord

## BACKGROUND OF THE INVENTION

Field of the invention:

This invention relates to a steel cord with improved corrosion-resistance for use as an reinforcing material of rubber products, such as vehicle tires, conveyor belts, high pressure hoses, etc.

Description of the prior art:

Conventional steel cord is made of wire rod containing 0.80 - 0.85% by weight carbon (C), 0.12 - 0.32% by weight silicon (Si), 0.30 - 0.60% by weight manganese (Mn), the remainder being iron (Fe) and unavoidable impurities, more particularly, wire rod of a diameter of 5.0 - 6.4mm is drawn by repeating a drawing process and a patenting process, is subjected to brass plating and is formed into fine steel wire of the desired diameter by a final drawing process. Plural numbers of such fine steel wire are twisted together by a stranding machine into a steel cord.

A plurality of such steel cords are covered with vulcanized rubber as they are arranged in parallel at the desired space, for use as reinforcing material of rubber products, such as vehicle tires.

Since rubber products, especially vehicle tires, are used under various conditions, steel wire which composes steel cord is required to have corrosion-resistance, strength and high adhesiveness to rubber material so that steel cord can perform its duties as reinforcing material.

However, if adhesion between steel cord and rubber is bad, steel cord separates from rubber during running of a car, namely, so-called "separates phenomenon" takes place. Besides, steel wire composing steel cord gets rusty due to water in rubber or water and salt which have entered rubber from the outside and such rust spreads abruptly in a lengthwise direction of cord and as a result, strength of steel cord lowers to a large extent and "separates phenomenon" is accelerated, namely, durability of tires is reduced considerably.

## SUMMARY OF THE INVENTION

An object of the present invention is to improve fatigue-resistance of steel cord by increasing anti-corrosion and strength of steel wire which constitutes a steel cord.

Another object of the present invention is to prevent water from getting into a steel cord by making a steel cord perfectly coverable with rubber by improving its adhesiveness to rubber. A further object of the present invention is to improve durability of tires by using steel cord under the present invention for the whole or a part of a belt portion, a carcass portion and a chafer portion of a tire.

In order to attain the above objects, the present inventors made earnest studies about the metal composition of steel wires composing a steel cord, characteristics of steel wire and the twisting composition of a steel cord and finally completed the present invention.

## BRIEF DESCRIPTION OF THE DRAWINGS

The nature and advantage of the present invention will be made more apparent from the following description made with reference to the accompanying drawings, in which:

Fig. 1 through to Fig. 3 are comparative graphs of the result of each test of the conventional steel wire and the improved steel wire, of which Fig. 1 is a comparative graph, showing the result of Hunter type fatigue test carried out after samples were left under corrosion conditions; Fig. 2 is a comparative graph, showing the result of the test of loss in quantity by corrosion in relation to solutions of different pH; and Fig. 3 is a comparative graph, showing the result of Hunter type fatigue test in solutions of different pH;

Fig. 4 is a comparative graph, showing the result of fatigue test carried out for examining the effect on the improved steel wire by the amount of V added;

Fig. 5 through to Fig. 10 are cross sections, each showing an embodiment of the steel cord according to the present invention.

Fig. 11 shows an embodiment of a tire using steel cord according to the present invention, in which Fig. 11A is a rough cross section; and Fig. 11B is a rough cross section of a reinforcing material.

## DETAILED DESCRIPTION OF THE INVENTION

An example of the result of the studies is explained below.

Both the conventional steel wire 1 and the improved steel wires 2 - 4, all having chemical ingredients (Wt %) shown in Table I and diameter of 5.5mm, were subjected to a patenting treatment, a pre-treatment of descaled lubricant film and a drawing process by a wire drawing machine. By repeating these treatments and process, they were made into steel wires of medium size, which were subjected to a final patenting treatment under such conditions that metallic organization which is high in patenting strength and suitable for the wire drawing process is obtainable. Then, they were given brass plating (as a treatment prior to a wire drawing process) for improving drawability and adhesiveness to rubber and lastly subjected to a final wire drawing process. Thus, fine steel wires of a diameter of 0.23mm for steel cord were obtained.

Various steel wieres thus obtained were measured for the reduction of area value (RA) and the torsion value (TN) in the tensile strength (TS) of steel wire by using a tensile tester and a torsion tester, with the results as shown in Table I.

3

TABLE I

| Classification | Symbol | Chemical Composition (wt%) | | | | | | | | TS kg/mm² | RA % | TN Times |
|---|---|---|---|---|---|---|---|---|---|---|---|---|
| | | C | Si | Mn | P | S | Cu | V | Al | | | |
| Conventional Steel Wire | 1 | 0.85 | 0.20 | 0.51 | 0.003 | 0.002 | Tr | Tr | 0.004 | 311 | 44 | 37 |
| Improved Steel Wire | 2 | 0.84 | 0.20 | 0.52 | 0.004 | <0.001 | 0.26 | Tr | 0.004 | 308 | 41 | 38 |
| Improved Steel Wire | 3 | 0.85 | 0.20 | 0.50 | 0.006 | 0.001 | Tr | 0.054 | 0.004 | 314 | 53 | 39 |
| Improved Steel Wire | 4 | 0.82 | 0.19 | 0.53 | 0.008 | 0.002 | 0.19 | 0.096 | 0.004 | 307 | 44 | 36 |

As is obvious from Table I, similarly to the conventional steel wire, the improved steel wire has the desired strength, namely, tensile strength TS of more than 300 kg/mm², the reduction of area value RA of more than 40% and the torsion value TN of more than 30 times, all having attained the target value required for steel wire for the use of steel cord.

Various corrosion tests were carried out, using samples A, B, C and D made from the improved steel wire 2, 3, 4 and the conventional steel wire 1 respectively in Table I.

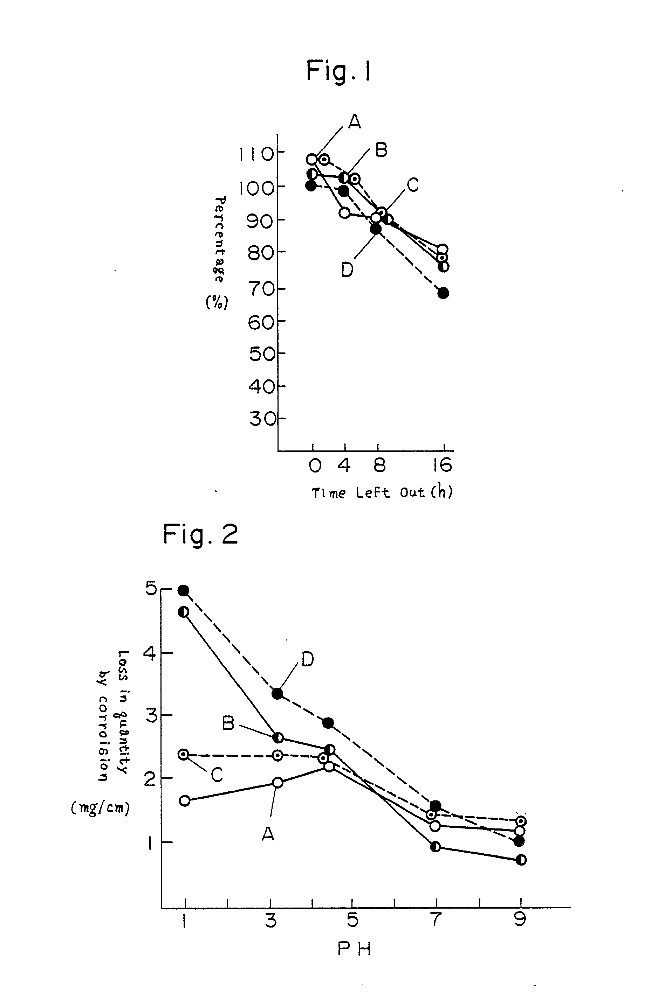

Fig. 1 is a graph, showing the results of fatigue tests in the case where stress $\sigma = 150$ kg/mm². The ordinate shows corrosion fatigue values (in percentage) in the case where the value of sample D of the conventional steel wire before corrosion (in the case where the time in which it is left as it is is zero) is made 100%. The larger the numerical value, the better the corrosion fatigue value. Fatigue tests were

4

carried out by a Hunter type fatigue tester under the testing conditions that after samples were left as they were for 0 hour, 4 hours, 8 hours and 16 hours at 80°C x 80% RH, they were tested for fatigue.

As can be seen from Fig. 1, samples A, B and C of the improved steel wire are superior to the sample D of the conventional steel wire in the corrosion fatigue value and also are small in the effective rate due to the time in which they were left as they were and less in the effect of corrosion.

Fig. 2 shows the results of tests of loss in quantity by corrosion in relation to pH. Solutions used are 0.5 N - Nacl properly adjusted in pH with NaCl or HCl. Each sample was soaked in a solution of each pH for 20 hours and was measured for the difference in weight.

As can be seen from Fig. 2, samples A, B and C of the improved steel wire, as compared with sample D of the conventional steel wiere, is resistant especially to strong acid.

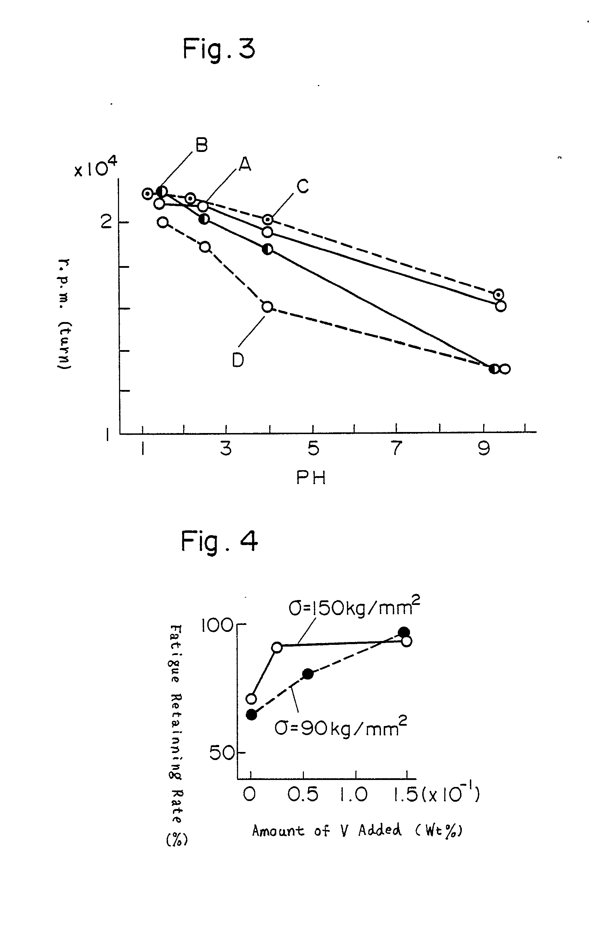

Fig. 3 shows the results of Hunter system fatigue tests carried out on fatigue test pieces soaked in salt water. Stress is $\sigma$ = 90 kg/mm². Samples A, B, C of the improved steel wire, as compared with sample D of the conventional steel wire, are superior in anti-corrosion fatigue.

In the case of sample A of the improved steel wire, by adding 0.26% by weight Cu, anti-corrosion effect by Cu was displayed and a high fatigue value was obtained in the corrosion condition. In the case of sample B of the improved steel wire, by adding 0.054% by weight V, vanadium carbide educed to a grain boundary due to the patenting treatment and a high fatigue value was obtained to the grain boundary corrosion.

In the case of sample C of the improved steel wire, by adding 0.19% by weight Cu and 0.096% by weight V at the same time, anti-corrosion effect due to Cu and effect to the grain boundary corrosion due to V were obtained at the same time.

Cu is a metal which is more precious than $H_2$. Cu involves no corrosion of hydrogen generating type and improves anti-corrosion effect to a large extent, but if it is less than 0.1% by weight, its effect lowers and if it exceeds 0.5% by weight, toughness lowers.

V forms carbide, when it connects with N or C. Because of its eduction reinforcing action, it is useful for high strengthening, especially effective for corrosiveness of grain boundary. However, if it is less than 0.05% by weight, its effect lowers and if it exceeds 1.0% by weight, carbide educes, toughness lowers and processability worsens.

The effect of adding V is shown in Fig. 4. Fig. 4 shows the results of fatigue tests carried out by a Hunter type fatigue tester on steel cords which were left as they were for 16 hours at 80°C and 80% RH.

The more the amount of V added, the better the fatigue retaining rate. However, if the amount of V added is excessive, more carbide educes to the grain boundary and wire drawability worsens. Also, addition of V in a large quantity involves cost increase.

The results of experiments indicate that the proper amount of V to be added is 0.05 - 1.0% by weight.

As a result of the above studies, we have completed a fine steel wire for steel cord which is much improved in anti-corrosion strength, toughness and adhesiveness to rubber. Then, this fine steel wire was subjected to a conventional plating treatment, such as brass plating, and using such steel wire, various kinds of steel cord, namely, regular cord, open cord, single cord and plural cord of properly selected twist pitch (5.0 - 20mm) and twist direction (S twist or Z twist) were made. These steel cords were subjected to various kinds of test and we finally completed the present invention.

Thus, a steel cord according to the present invention is essentially made by twisting together a plurality of fine steel wires of a diameter of 0.10 - 0.50mm, each consisting of less than about 0.60% - about 0.90% by weight C, about 0.15% - about 0.35% by weight Si, about 0.30% - 0.90% by weight Mn and at least one of about 0.1% - 0.5% by weight Cu and about 0.05% - about 1.0% by weight V, the remainder being Fe and unavoidable impurities.

As the twisting composition of the above steel cord, the following compositions are proper.

Open twist of 1 X N (3 - 5)

$$(1.1 \leqq \frac{\text{Average dia. of cord}}{\text{Dia. of cord at closed part}} \leqq 1.5)$$

1 x 2,

$$3 + 6 \quad (1.6 \leqq \frac{\text{Dia. of side wire}}{\text{Dia. of core wire}} \leqq 1.8)$$

2 + 6 - 7 (Dia. of core wire = Dia. of side wire)

$$3 + 9 \quad (1.05 \leqq \frac{\text{Dia. of core wire}}{\text{Dia. of side wire}} \leqq 1.25)$$

2 + 2

$N_1$ (2 - 4) + $N_2$ (7 - 9) + $N_3$ (12 - 15)

(The sum total of spaces between wires on the line
connecting the centers of each wire of the inter-
mediate layer $N_2$ and spaces between wires on the
line connecting the centers of each wire of the
outer layer $N_3$ should be 5 - 20% of the sum total
of the lengths of the above lines connecting the
centers.)

A plurality of steel cords of the above composition are arranged at the whole part or a part of a belt portion, a carcass portion and a chafer portion of a tire so as to compose a tire.

In order to improve work efficiency, it is possible to embed the required number of the above steel cord in rubber to form a reinforcing material of substantially belt-like shape and to embed such reinforcing material in the desired part of each portion of a tire.

The reason why chemical ingredients of each element added were limited is given below.

C is an important factor for ensuring the strength required for steel cord and at least about 0.6 Wt% should be contained. The more the content of C, the higher the strength of steel cord but if the content of C is excessive, carbide educes, ductility lowers, processability worsens and the breaking of a wire is apt to take place at a welded part and a segregation part at the time of wire drawing and wire stranding. Also, at a heat treatment, cementite is generated and this has a bad influence on wire drawing and wire stranding.

From the above, the amount of C to be added should be within the range of about 0.60 - about 0.90 Wt%, preferably the range of about 0.75 - about 0.85 Wt%.

Si is usually added in melted steel as an deoxidizer in the process of refining but if it exceeds 0.35 Wt%, nonmetallic interposition of $SiO_2$ system is generated and as a result, purity of steel worsens and toughness lowers. Therefore, the amount of Si to be added should be within the range of about 0.15 - about 0.35 Wt%, preferably the range of about 0.17 - about 0.25 Wt%.

Mn is also necessary for deoxidation. It is effective for improving quenchability and tensile strength. In order to make Mn display the above effect efficiently, it is required to add Mn at least 0.30 Wt% but if the amount of Mn exceeds 0.90 Wt%, segrigation tendency of ingredients increases, residual austenite increases at quenching and processability worsens due to lowering of of toughness and ductility. Therefore, a more preferable amount of Mn to be added is from about0.40 Wt% to about 0.70 Wt%.

An explanation is made below about Cu and V which are added for imparting anti-corrosiveness, with C, Si, Mn, Ni as basic elements to be added.

Cu is a metal which is more precious than $H_2$. It involves no corrosion of hydrogen generating type and improves anti-corrosiveness effectt to a large extent. However, if it is less than 0.10 Wt%, its effect lowers and if it exceeds 0.50 Wt%, toughness lowers.

Therefore, the amount of Cu to be added should be within the range of about 0.10 - about 0.50 Wt%, preferably about 0.15 - about 0.40 Wt%.

V forms carbide, when it combines with N or C. Because of its eduction reinforcing action, it is useful for high strengthening, especially effective for corrosiveness of grain boundary. However, if it is less than 0.5% by weight, its effect lowers and if it exceeds 1.0% by weight, carbide educes, toughness lowers and processability worsens. Therefore, the amount of V to be added should be within the range of about 0.05 - about 1.0 Wt%, preferably about 0.05 - about 0.5 Wt%.

While Cu is effective for corrosion at the surface of steel wire, V is effective for corrosion at the inside of steel wire. If either one of them or both are added according to the use, anti-corrosiveness will be improved by addition of a small amount within the range mentioned above.

As P is liable to embrittle steel, it is preferable to add it less than 0.03% by weight. Al has strong deoxidizing action and is effective for fixing N in steel and for finely granulating austenite but is liable to be an interposition. Therefore, it is preferable to add it less than 0.06% by weight.

A description is made below about embodiments of the present invention.

## Embodiment 1

First quenching --- Pickling --- First wire drawing --- Second quenching --- Second wire drawing ---Third quenching --- Plating --- Third wire drawing

The above processes were carried out for the conventional wire rod and the improved wire rods of 5.5mmØ, each having chemical ingredients shown in Table II and the comparative steel wire Ⓐ of 0.23mmØ, the improved steel wire Ⓑ,Ⓒ,Ⓓ,Ⓔ,Ⓕ and Ⓖ were obtained.

Using the improved steel wire Ⓐ, Ⓑ, Ⓓ and Ⓕ, steel cords 1 - 6, each having the twisting composition shown in Table III, were produced. In TableII, measured values of tensile strength TS, reduction of area RA and torsion TN were added.

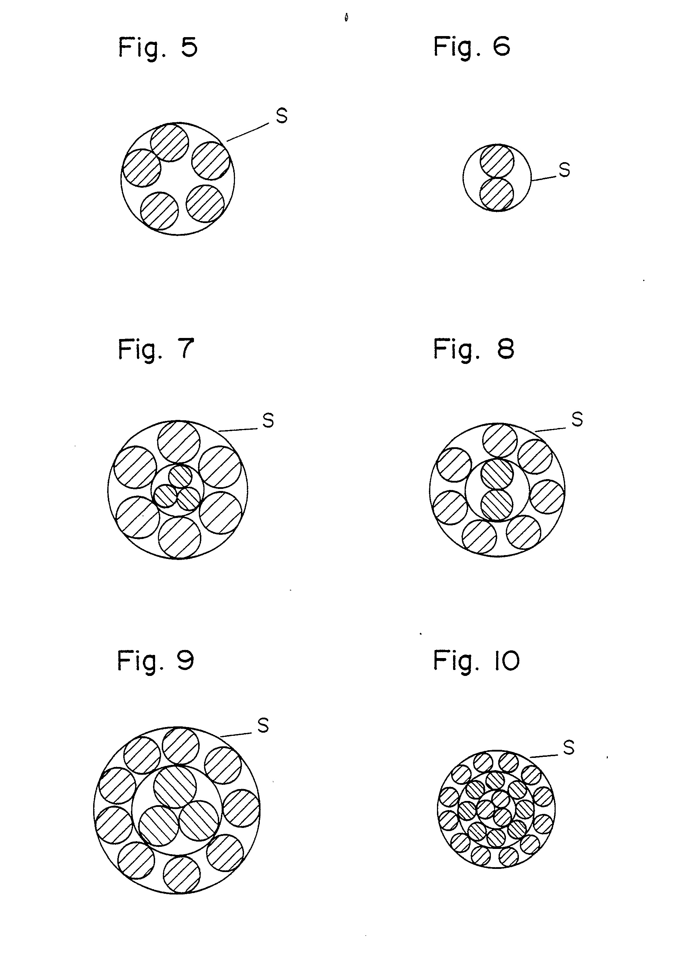

Fig. 5 shows an example of steel cord S produced which has the open construction of 1 x 4 x 0.23, S twist and twist pitch 9.5mm.

The patenting conditions for imparting good wire drawability in this embodiment are to raise a nose of T.T.T. curved line and at the same time to move it to the many hours side, namely, it is necessary to make the T.T.T. curved line take such a form that it was moved above rightward and parallelly.

Therefore, it is required to use the patenting condition for ensuring good wire drawing and good lamella space. For example, if the conventional heat treating conditions are adopted, there is a fear that such organization which causes an obstacle to the wire drawing process, for example, bainite or martensite, is generated in pearlite. Therefore, in the present invention the lead patenting treating temperature was set 35°C higher than in the case of using conventional wire rod at a heat treatment so as to effect pearlite modification.

## TABLE II

| Classification | Symbol | Chemical Composition (Wt%) | | | | | | | | TS kg/mm² | RA % | TN Times |
|---|---|---|---|---|---|---|---|---|---|---|---|---|
| | | C | Si | Mn | P | S | Cu | V | Al | | | |
| Conventional Steel Wire | Ⓐ | 0.72 | 0.22 | 0.51 | 0.014 | 0.009 | · Tr | Tr | 0.002 | 279 | 43 | 39 |
| Improved Steel Wire | Ⓑ | 0.75 | 0.21 | 0.57 | 0 004 | 0.008 | 0.16 | 0.001 | 0.003 | 282 | 45 | 46 |
| | Ⓒ | 0.82 | 0.19 | 0.52 | 0.004 | 0.023 | 0.25 | Tr | 0.005 | 313 | 45 | 38 |
| | Ⓓ | 0.72 | 0.20 | 0.55 | 0.004 | 0.001 | Tr | 0.106 | 0.003 | 283 | 52 | 43 |
| | Ⓔ | 0.81 | 0.17 | 0.52 | 0.004 | <0.001 | Tr | 0.150 | 0.003 | 321 | 50 | 37 |
| | Ⓕ | 0.85 | 0.19 | 0.52 | 0.008 | 0.002 | 0.19 | 0.001 | 0.004 | 335 | 47 | 40 |
| | Ⓖ | 0.82 | 0.21 | 0.48 | 0.007 | 0.004 | 0.18 | 0.105 | 0.003 | 314 | 46 | 49 |

TABLE III

Specification of Steel Cord

| Steel Cord No. | Symbol of steel wire | Composition | Twisting Direction | Twist pitch |
|---|---|---|---|---|
| 1 | Ⓐ | 1 × 12 × 0.23 + 1 | S | 12.5 |
| 2 | Ⓐ | 1 × 5 × 0.23 | S | 9.5 |
| 3 | Ⓐ | 1 × 4 × 0.23 | S | 9.5 |
| 4 | Ⓑ | 1 × 12 × 0.23 | S | 12.5 |
| 5 | Ⓓ | 1 × 5 × 0.23 | S | 9.5 |
| 6 | Ⓕ | 1 × 4 × 0.23 | S | 9.5 |

Samples ① - ⑥ for adhesion tests were made by embedding steel cords 1 - 6 in Table III in vulcanized rubber. Pulling out tests and measuring of the degree of rusting were carried out, with the results shown in Table IV.

TABLE IV

| No. | ① | ② | ③ | ④ | ⑤ | ⑥ |
|---|---|---|---|---|---|---|
| I | 21 | 28 | 27 | 38 | 54 | 61 |
| II | 120 | 111 | 114 | 104 | 82 | 73 |

In the above table, No. indicates a sample No., I expresses the rate of pulling out force retention and II expresses the length (mm) of adhesiveness deterioration.

9

In Table IV, the rate of pulling out force retention shows the relation between the pulling out force by which a steel cord (before it is soaked in salt water) was pulled out and the pulling out force by which a steel cord (after it was soaked in 20% salt water for one week) was pulled out. The ratio when a steel cord is not aged (not deteriorated) is 100% and the larger the numerical value, the less the ageing (deterioration), namely, the better the result.

The length of adhesiveness deterioration is explained below.

A sample (steel cord embedded in rubber) is cut in the length of 15cm. One end of the sample is covered with synthetic resin paint so that a corrosive liquor may not permeate. The sample is soaked in a sodium hydroxide aqueous solution (10% concentration) for 24 hours at a room temperature and then the length of the part which deteriorated in adhesiveness between steel cord and rubber due to corrosion of steel cord (namely, the part where steel cord and rubber do not adhere to each other) is measured. The measured value is expressed by mm. 150mm means that adhesiveness deteriorated throughout the whole length. The larger the numerical value, the greater the diffusion of rust.

As is obvious from Table IV, samples ④ - ⑥ prepared from the improved steel wire show a higher rate of pulling out force retention than samples ① - ③ prepared from the comparative steel wire and also show a sharp decrease in the generation and diffusion of rust. Similar good results were obtained from the improved steel wire Ⓒ Ⓔ Ⓖ .

## Embodiment 2

Steel cords 7 - 36, each having the twist composition shown in Table VI, were prepared from a comparative steel wire H made of conventional wire rod and improved steel wire Ⓘ - Ⓜ made of improved wire rod, each having the chemical ingredients shown in Table V.

In Table V, numerical values of tensile strength TS, reduction of area RA and torsion TN are measured values of each steel wire which was drawn in a diameter of 0.23mm∅.

TABLE V

| Symbols | Chemical Composition (wt%) | | | | | | | | TS kg/mm² | RA % | TN Times |
|---|---|---|---|---|---|---|---|---|---|---|---|
| | C | Si | Mn | P | S | Al | V | Cu | | | |
| Ⓗ | 0.82 | 0.20 | 0.51 | 0.011 | 0.005 | 0.002 | — | — | 315 | 43 | 44 |
| Ⓘ | 0.82 | 0.19 | 0.53 | 0.008 | 0.006 | 0.001 | 0.52 | — | 317 | 44 | 39 |
| Ⓙ | 0.81 | 0.35 | 0.58 | 0.01 | 0.007 | 0.003 | — | 0.33 | 311 | 41 | 37 |
| Ⓚ | 0.77 | 0.22 | 0.48 | 0.007 | 0.010 | 0.002 | 0.160 | 0.015 | 306 | 48 | 51 |
| Ⓛ | 0.79 | 0.20 | 0.49 | 0.011 | 0.008 | 0.002 | 0.150 | 0.26 | 309 | 44 | 45 |
| Ⓜ | 0.85 | 0.21 | 0.52 | 0.014 | 0.011 | 0.003 | 0.56 | 0.37 | 338 | 42 | 37 |

Steel cords 7 - 36, each having the twist composition shown in Table VI, were prepared from the above steel wires Ⓗ - Ⓜ. As in the case of Embodiment 1, samples for adhesion tests ⑦ - ㊱ were prepared from these steel cords. Using these samples, pulling out tests and measuring of the degree of rusting were carried out, with the results as shown in Table VII.

An example of the above steel cords produced is shown in Fig. 6 - Fig. 10.

The composition of steel cord S in each figure is as shown below.

11

| Composition | Twisting direction | Twist pitch | |
|---|---|---|---|
| 1 x 2 x 0.30 | S | 14.0 | (Fig.6) |
| 3 x 0.20 + 6 x 0.36 | S/Z | 10.0/18.0 | (Fig.7) |
| 2 + 7 x 0.22 | S/S | 10.0/10.0 | (Fig.8) |
| 3 x 0.22 + 9 x 0.22 | S/S | 6.0/12.0 | (Fig. 9) |
| 3 + 8 + 12 x 0.20 | S/S/Z | 5.0/10.5/15.5 | (Fig.10) |

TABLE VI

| Steel cord No. | Steel wire No. | Specification of steel cord | | |
|---|---|---|---|---|
| | | Composition | Twisting direction | Twist pitch |
| 7 | Ⓗ | 1×3×0.25 | S | 10.0 |
| 8 | " | 1×4×0.25 | " | 10.0 |
| 9 | " | 3×0.20+6×0.38 | S/Z | 10.0/18.0 |
| 10 | " | 1×12×0.20 | S | 12.5 |
| 11 | " | 3+9×0.20 | S/Z | 6.0/12.0 |
| 12 | " | 3+9+15×0.20 | S/S/Z | 6.0/12.0/18.0 |
| 13 | " | 1×2×0.30 | S | 14.0 |
| 14 | " | 3×0.20+6×0.36 | S/Z | 10.0/18.0 |
| 15 | " | 2+7×0.22 | S/S | 6.0/12.0 |
| 16 | " | 3×0.22+9×0.20 | " | 14.5/14.5 |
| 17 | " | 2+2×0.25 | " | 14.0/14.0 |
| 18 | " | 3+8+12×0.20 | S/S/Z | 5.0/10.5/15.5 |
| 19 | Ⓘ | 1×3×0.25 | S | 10.0 |
| 20 | Ⓙ | 1×4×0.25 | " | " |
| 21 | Ⓚ | 3×0.20+6×0.38 | S/Z | 10.0/18.0 |
| 22 | " | 3×12×0.20 | S | 12.5 |
| 23 | " | 3+9×0.20 | S/S | 6.0/12.0 |
| 24 | Ⓛ | 3+9+15×0.20 | S/S/Z | 6.0/12.0/18.0 |
| 25 | Ⓘ | 1×2×0.30 | S | 14.0 |
| 26 | Ⓙ | " | " | " |
| 27 | " | 3×0.20+6×0.36 | S/Z | 10.0/18.0 |
| 28 | Ⓚ | 3×0.20+6×0.35 | " | " |
| 29 | Ⓘ | 2+6×0.22 | S/S | 12.0/12.0 |
| 30 | Ⓛ | 2+7×0.22 | " | 10.0/12.0 |
| 31 | Ⓙ | 3×0.22+9×0.20 | " | 14.5/14.5 |
| 32 | Ⓛ | " | " | 6.0/12.0 |
| 33 | Ⓚ | 2+2×0.25 | S•S | 14.0•14.0 |
| 34 | Ⓜ | 2+2×0.22 | S•S | 12.0•12.0 |
| 35 | Ⓛ | 3+8+12×0.20 | S/S/Z | 5.0/10.5/15.5 |
| 36 | Ⓜ | 4+9+14×0.20 | " | " |

13

**TABLE VII**

| No. | ⑦ | ⑧ | ⑨ | ⑩ | ⑪ | ⑫ | ⑬ | ⑭ | ⑮ | ⑯ | ⑰ | ⑱ |
|---|---|---|---|---|---|---|---|---|---|---|---|---|
| I | 30 | 28 | 22 | 23 | 26 | 24 | 48 | 43 | 47 | 44 | 45 | 42 |
| II | 109 | 121 | 118 | 117 | 115 | 117 | 98 | 104 | 94 | 95 | 93 | 95 |

| No. | ⑲ | ⑳ | ㉑ | ㉒ | ㉓ | ㉔ | ㉕ | ㉖ | ㉗ | ㉘ | ㉙ | ㉚ | ㉛ | ㉜ | ㉝ | ㉞ | ㉟ | ㊱ |
|---|---|---|---|---|---|---|---|---|---|---|---|---|---|---|---|---|---|---|
| I | 37 | 41 | 36 | 35 | 37 | 40 | 53 | 54 | 53 | 60 | 55 | 63 | 51 | 62 | 57 | 63 | 62 | 64 |
| II | 108 | 109 | 104 | 103 | 102 | 101 | 81 | 83 | 79 | 74 | 78 | 71 | 78 | 72 | 73 | 70 | 72 | 71 |

In the above table, the upper column is for samples prepared from the conventional steel wire and the lower column is for samples prepared from the improved steel wire. Samples of the same specification are corresponded to each other up and down.

In the table, No. indicates a sample No., I indicates the rate of pulling out force retention (%) and II indicates the length (mm) of adhesion deterioration.

As is obvious from Table VII, samples ⑲ - ㊱ prepared from the improved steel wire are superior to samples ⑦ - ⑱ prepared from the conventional steel wire in the same specification, especially in the specific twist composition where rubber is penetrable.

Embodiment 3

Steel cords 37 - 45, each having the twist composition shown in Table VIII, were prepared from the conventional steel wire H and the improved steel wire I - M, each having the same metal composition as in the case of Embodiment 2. Samples ㊲ - ㊺ for adhesion tests were prepared from these steel cords and tests similar to the cases of Embodiment 1 and Embodiment 2 were carried out. The results of such tests are shown in Table IX.

14

TABLE VIII

| Steel cord No. | Steel wire No. | Specification of steel cord | | | |
|---|---|---|---|---|---|
| | | Twist Composition | Dia. of element wire | How to twist | $D_1/D_2$ |
| 37 | (H) | 1 x 5 | 0.25 | | — |
| 38 | " | 1 x 5 | 0.25 | | 1.2 |
| 39 | (K) | 1 x 5 | 0.25 | | — |
| 40 | (K) | 1 x 5 | 0.25 | | 1.1 |
| 41 | (K) | 1 x 5 | 0.25 | " | 1.15 |
| 42 | (I) | 1 x 4 | 0.25 | " | 1.2 |
| 43 | (J) | 1 x 5 | 0.25 | " | 1.25 |
| 44 | (L) | 1 x 4 | 0.25 | " | 1.3 |
| 45 | (M) | 1 x 5 | 0.25 | " | 1.45 |

EP 0 341 680 A1

TABLE IX

| No. | ① | ② | ③ | ④ | ⑤ | ⑥ |
|-----|-----|-----|-----|-----|-----|-----|
| I | 21 | 28 | 27 | 38 | 54 | 61 |
| II | 120 | 111 | 114 | 104 | 82 | 73 |

In the above table, No. indicates a sample No., I indicates the rate (%) of pulling out force retention and II indicates the length (mm) of adhesion deterioration.

As is obvious from Table IX, sample ㊴ prepared from the improved steel wire of conventional closed twist is superior to sample ㊲ prepared from the conventional steel wire. Samples ㊵ ~ ㊺ prepared from the improved steel wire of specific open construction where rubber is easy to penetrate are superior to sample ㊳ prepared from the conventional steel wire and show high anti-corrosion effect.

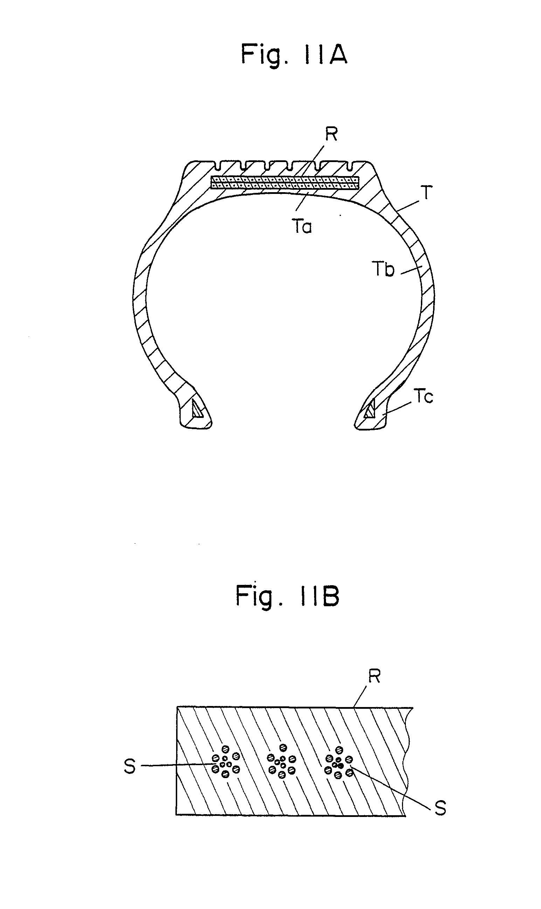

Using steel cords in the above Embodiments 1, 2 and 3 for the whole part or a part of belt portion, carcass portion and chafer portion, tires were made on an experimental basis. Such tires were measured for durability and kinetic capability. Fig. 11 shows an example of a tire using the steel cord under the present invention.

The tire T in Fig. 11 has a plurality of steel cords S arranged in parallel and two reinforcing materials R covered with rubber material embedded in a belt portion. Tb and Tc designate a carcass portion and a chafer portion respectively.

In appraising the durability of tires, actual car long-distance running tests were carried out. After the long-distance running, tires were cut purposely to inspect damaged conditions of steel cord and also to measure rusting conditions of steel cord. For appraising kinetic capability, cornering power and comfortableness to ride in were measured.

The results of the above tests have confirmed that regarding the breakage and rusting of steel cord, tires using steel cords under the present invention are more effective than those using conventional steel cords but so far as kinetic capability is concerned, there is little difference between the two.

With regard to a tire with two reinforcing materials using steel cords under the present invention embedded in a belt portion, a long-distance running test was carried out. Before the start of running, a hole of a diameter of about 4mmø which reaches a belt portion was made at the bottom of a groove of a tread portion of tire and after the long-distance running, the tire was cut purposely to inspect rusting conditions. The result was that rusting was confined to the hole part and spread of rust elsewhere was not observed. Thus, effectiveness of the present invention has been confirmed.

Since the present invention is composed as mentioned above, plasticity and processability at wire drawing and at stranding are not lowered owing to the effect of V and Cu. It does not involve deterioration of toughness and ductility and has high anti-corrosiveness.

When the construction of steel cord is made such that rubber is penetrable, the surface of element wire is completely covered with rubber and therefore no water gets into steel cord. This, coupled with anti-corrosiveness of element wire itself, displays superior anti-corrosiveness of steel cord.

Thus, in the case where the above steel cords are used for tires, anti-corrosiveness and durability are improved to a large extent and usable life of tires is prolonged by a large margin.

## Claims

1. A steel cord comprising a plurality of very fine steel wires twisted together, each having a wire diameter of ranging from 0.10 to 0.50mm and containing essentially:
from about 0.60% to about 0.90% by weight carbon;

from about 0.15% to about 0.35% by weight silicon;
from about 0.30% to about 0.90% by weight manganese;
at least one of
from about 0.10% to about 0.50% by weight copper and
from about 0.05% to about 1.0% by weight vanadium; and
the remainder being iron and unavoidable impurities.

2. A steel cord as set forth in Claim 1, wherein
copper content is from about 0.15% to about 0.4% by weight and vanadium content is from about 0.05% to about 0.5% by weight.

3. A steel cord as set forth in Claim 1, wherein the twist composition is 1 x N (3 - 5) and

$$1.1 \leq \frac{\text{Average diameter of cord}}{\text{Diameter of cord at closed portion}} \leq 1.5$$

4. A steel cord as set forth in Claim 1, wherein the twist composition is 3 + 6 and

$$1.6 \leq \frac{\text{Diameter of side wire}}{\text{Diameter of core wire}} \leq 1.8$$

5. A steel cord as set forth in Claim 1, wherein the twist composition is 2 + 6 - 7 and diameter of core wire = diameter of side wire.

6. A steel cord as set forth in Claim 1, wherein the twist composition is 3 + 9 and

$$1.05 \leq \frac{\text{diameter of core wire}}{\text{diameter of side wire}} \leq 1.25$$

7. A steel cord as set forth in Claim 1, wherein the twist composition is $N_1$ (2 - 4) + $N_2$ (7 - 9) + $N_3$ - (12 - 15)

8. A tire having a reinforcing material which consists of a plurality of steel cords set forth in Claim 1 covered with rubber material and embedded in at least a part of a belt portion, a carcass portion and a chafer portion.

Fig. 1

Fig. 2

# Fig. 3

# Fig. 4

EP 0 341 680 A1

Fig. 5

Fig. 6

Fig. 7

Fig. 8

Fig. 9

Fig. 10

# Fig. 11A

# Fig. 11B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 404 969 (HOLMES)<br>* Claims 1-3,9; column 3, examples 1,2<br>* & DE-B-1 758 775<br>--- | 1 | C 22 C 38/12<br>C 22 C 38/16<br>B 60 C 9/00 |
| X | US-A-3 668 020 (LUCHT)<br>* Claims 1-6; column 1, lines 41-49;<br>column 2, lines 16-19; table I, steel 3<br>* & FR-A-2 004 184<br>--- | 1 | |
| X | US-A-3 718 442 (LUCHT)<br>* Claim 1 *<br>--- | 1 | |
| A | GB-A-1 355 169 (GRAF & CIE)<br>* Claim 2 *<br>--- | 1 | |
| A | SU-A- 451 785 (OUEPOV et al.)<br>* Whole document *<br>--- | 1,2 | |
| A | AU-A- 483 965 (AMSTED INDUSTRIES INC.)<br>* Claim 1 *<br>--- | 1 | TECHNICAL FIELDS SEARCHED (Int. Cl.4)<br><br>C 22 C 38<br>B 60 C |
| Y | FR-A-2 473 080 (KANAI)  ·<br>* Whole document *<br>--- | 3-7 | |
| Y | US-A-4 488 587 (UMEZAWA et al.)<br>* Whole document *<br>--- | 3-7 | |
| Y | US-A-4 738 096 (HATAKEYAMA et al.)<br>* Whole document *<br>----- | 3@ | |

The present search report has been drawn up for all claims

| Place of search | Date of completion of the search | Examiner |
|---|---|---|
| THE HAGUE | 22-08-1989 | LIPPENS M.H. |

EPO FORM 1503 03.82 (P0401)